# FASCICULE DE BREVET EUROPEEN

(11) **EP 4 485 880 B1**
(45) Date de publication et mention de la délivrance du brevet: **04.02.2026**
(21) Numéro de dépôt: 24184420.8
(22) Date de dépôt: 25.06.2024
(51) Int. Cl.: H04W 24/08, H04W 24/10, H04L 41/147, H04L 43/08, H04L 43/0823, H04L 43/16, H04L 47/74

(54) **PROCÉDÉS DE TRANSMISSION DE DONNÉES, DISPOSITIFS DE COMMUNICATION ET SYSTÈME ASSOCIÉ**
DATENÜBERTRAGUNGSVERFAHREN, KOMMUNIKATIONSVORRICHTUNGEN UND SYSTEM DAFÜR
DATA TRANSMISSION METHODS, COMMUNICATION DEVICES AND SYSTEM THEREOF

(30) Priorité: 28.06.2023 FR 2306795
(43) Date de publication de la demande: 01.01.2025
(73) Titulaire: SAGEMCOM ENERGY & TELECOM SAS, 92270 Bois-Colombes (FR)
(72) Inventeur: TEBOULLE, Henri, 92270 Bois-Colombes (FR); ROTER, Ziv, 92270 Bois-Colombes (FR)
(74) Mandataire: Novagraaf Technologies

(56) Documents cités:
- EP-A1- 3 866 400
- US-A1- 2018 146 040

## Description

### Domaine technique

Sont décrits des procédés de transmission de données, des dispositifs de communication pour respectivement transmettre et recevoir les données, un système et un produit programme d'ordinateur associés. Les solutions décrites s'appliquent, de façon non limitative, dans le cadre d'une transmission de données collectées de façon récurrente.

### Arrière-plan technique

Dans de nombreuses applications, des dispositifs accumulent des données de façon périodique ou non-périodique nécessitant une collecte, par un dispositif client récepteur, des données accumulées par un dispositif serveur producteur. Tel est par exemple le cas de compteurs de nature diverse, tels que les compteurs électriques, de gaz, d'eau ou encore d'énergie thermique. Un tel dispositif peut générer des données périodiques, par exemple une valeur mesurée de façon répétée par le compteur sur une période donnée, ou encore en cas de survenance d'événements variés. Les données sont accumulées en attendant leur transmission au dispositif client collecteur.

La communication entre le serveur et le client peut se faire sur un réseau dont les conditions de transmission peuvent varier. Ces dispositifs peuvent par exemple être équipés d'une interface de réseau cellulaire de type 2G à 5G, sujet à interférences et dont la charge peut varier. De plus, le réseau peut être plus ou moins saturé. Effectuer une transmission dans des conditions défavorables a des conséquences néfastes : les trames envoyées peuvent le cas échéant ne pas être reçues correctement et il peut être nécessaire d'effectuer une ou plusieurs tentatives additionnelles pour renvoyer certaines trames. Ceci contribue non seulement à une éventuelle saturation du réseau, mais aussi à une surconsommation de données par le dispositif serveur.

Il existe un besoin pour un procédé de transmission efficace prenant en compte ces aspects.

US2018/146040A1 décrit un dispositif de transmission de données de capteurs.

### Résumé

Un ou plusieurs modes de réalisation concernent un procédé de transmission de données entre un dispositif serveur des données et un dispositif client récepteur des données dans un réseau de communication, le dispositif serveur comprenant une mémoire comportant du code logiciel et un processeur qui, quand il exécute le code logiciel, conduit le dispositif serveur à mettre en œuvre le procédé, le procédé comprenant :
- l'obtention, sur une première période de temps, d'une pluralité de mesures caractérisant une qualité de transmission entre le dispositif client et le dispositif serveur ;
- la détermination, en fonction des mesures, d'informations caractérisant l'évolution en fonction du temps, d'un niveau de qualité relatif de transmission durant la première période ;
- la transmission des informations au dispositif client ;
- la réception, lors d'une seconde période future par rapport à la première période, d'une requête de transmission des données du dispositif client, le moment de la transmission de la requête par le dispositif client étant fonction desdites informations transmises par le dispositif serveur au dispositif client; et
- la transmission des données au dispositif client en réponse à la requête.

Le dispositif serveur collecte ainsi des informations caractérisant, en fonction du temps, un niveau de qualité relatif de transmission durant une première période, ce qui permettra au dispositif client de mettre en œuvre ces informations pour décider d'un moment propice pour demander la transmission des données lors d'une période future. De plus, les informations caractérisent un niveau de qualité relatif de transmission durant la première période, ce qui permet de caractériser le meilleur niveau de qualité auquel le dispositif serveur peut prétendre.

Selon un ou plusieurs modes de réalisation, la première période étant subdivisée en intervalles de temps, la détermination des informations comprend la détermination d'un niveau de qualité pour chaque intervalle sur base des mesures effectuées pour cet intervalle par rapport à un ou plusieurs seuils déterminés à partir des mesures effectuées sur l'ensemble de la première période.

Selon un ou plusieurs modes de réalisation, le ou les seuils sont choisis entre la plus haute et la plus basse valeur de mesure de la première période.

Selon un ou plusieurs modes de réalisation, la détermination des informations et la transmission de ces informations sont effectuées périodiquement.

Selon un ou plusieurs modes de réalisation, la première période est une parmi : une plage horaire d'une journée, une journée.

Selon un ou plusieurs modes de réalisation, le procédé comprend la réception d'une requête de transmission des données du dispositif client et la transmission des données en réponse à la requête.

Un ou plusieurs modes de réalisation concernent un procédé de transmission de données entre au moins un dispositif serveur des données et un dispositif récepteur des données dans un réseau de communication, le dispositif récepteur comprenant une mémoire comportant du code logiciel et un processeur qui, quand il exécute le code logiciel, conduit le dispositif récepteur à mettre en œuvre le procédé, le procédé comprenant :
- la réception, de la part d'un dispositif serveur donné, d'informations caractérisant une évolution d'un niveau de qualité relatif de transmission entre le dispositif client et ledit dispositif serveur donné durant une première période de temps ;
- l'estimation du niveau de qualité relatif de transmission pendant un intervalle de temps donné de la seconde période sur base desdites informations correspondant au même intervalle de temps de la première période, la plage horaire couverte par la première période incluant au moins la plage horaire de la seconde période ;
- la décision d'envoi d'une requête de transmission des données au dispositif serveur donné pendant l'intervalle donné en fonction de la comparaison de l'estimation pour cet intervalle avec un seuil de qualité.

Selon un ou plusieurs modes de réalisation, la décision de l'envoi est prise au fur et à mesure de l'avancée du temps pendant la seconde période, jusqu'à ce qu'un envoi résulte en la réception réussie desdites données.

Selon un ou plusieurs modes de réalisation, ledit seuil de qualité est fonction du placement de l'intervalle donné dans la seconde période, le seuil de qualité ayant une valeur maximale en début de seconde période et baissant au fur et à mesure de l'avancée du temps dans la seconde période vers une valeur minimale.

Selon un ou plusieurs modes de réalisation, la seconde période est l'une parmi
- une partie d'une journée correspondant à la même partie de journée couverte par la première journée lors d'une journée précédente ;
- la journée consécutive à une journée couverte par la première période.

Selon un ou plusieurs modes de réalisation, le procédé comprend la réception des informations de la part d'une pluralité de dispositifs serveurs, la décision d'envoi d'une requête vers un dispositif serveur étant fonction des informations reçues de la part de ce dispositif serveur.

Un ou plusieurs modes de réalisation concernent un dispositif serveur comprenant une mémoire comportant du code logiciel et un processeur qui, quand il exécute le code logiciel, conduit le dispositif serveur à mettre en œuvre l'un des procédés décrits.

Un ou plusieurs modes de réalisation concernent un dispositif client comprenant une mémoire comportant du code logiciel et un processeur qui, quand il exécute le code logiciel, conduit le dispositif client à mettre en œuvre l'un des procédés décrits.

Un ou plusieurs modes de réalisation concernent un système comprenant un dispositif client et au moins un dispositif serveur.

Selon un ou plusieurs modes de réalisation, le réseau de communication est un réseau cellulaire.

Un ou plusieurs modes de réalisation concernent un support d'enregistrement non-transitoire lisible par un dispositif muni d'un processeur, ledit support comprenant des instructions qui, lorsque le programme est exécuté par un processeur d'un dispositif, conduisent le dispositif à mettre en œuvre au moins un des procédés décrits.

### Brève description des figures

D'autres caractéristiques et avantages apparaîtront au cours de la lecture de la description détaillée qui va suivre pour la compréhension de laquelle on se reportera aux dessins annexés parmi lesquels :
- la figure 1 est un diagramme bloc d'un système comprenant un dispositif serveur et un dispositif client selon un ou plusieurs modes de réalisation ;
- la figure 2 est un algorigramme d'un procédé mis en œuvre par un dispositif serveur de données selon un ou plusieurs exemples de réalisation ;
- la figure 3 est un algorigramme d'un procédé correspondant à une étape de la méthode de la figure 2 selon un ou plusieurs exemples de réalisation ;
- la figure 4 est un algorigramme d'un procédé mis en œuvre par un dispositif récepteur de données, ou dispositif client, selon un ou plusieurs exemples de réalisation.

### Description détaillée

Dans la description qui va suivre, des éléments identiques, similaires ou analogues seront désignés par les mêmes chiffres de référence.

Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en œuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en œuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en œuvre tout ou partie des fonctionnalités des blocs et/ou des phases des procédés ou méthodes selon les exemples de réalisation. Le code logiciel peut être stocké dans une mémoire ou un support lisible accessible directement ou à travers un autre module par le processeur ou contrôleur.

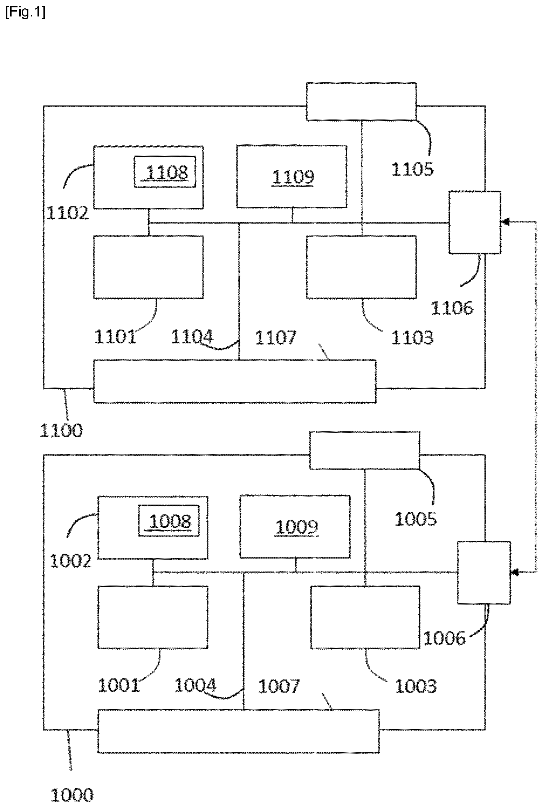

La figure 1 est un diagramme bloc d'un réseau de communication comprenant un dispositif 1000 et un dispositif 1100 aptes à communiquer à travers le réseau de façon bidirectionnelle, selon un exemple de réalisation non limitatif. Le dispositif 1000 est un dispositif qui stocke des données accumulées ou accumule lui-même des données, données dont au moins certaines sont à transmettre au dispositif 1100. On appellera par la suite le dispositif 1000 'serveur' et le dispositif 1100 'client'. Le dispositif serveur 1000 comporte un processeur 1001, une mémoire 1002, une source de données 1003, une interface utilisateur 1005, une interface de communication 1006 configurée pour communiquer de façon bidirectionnelle avec le dispositif client 1100, un afficheur 1007 adapté pour l'affichage de données à un utilisateur du dispositif serveur 1000, ainsi qu'une mémoire de travail 1009. Les différentes composantes du dispositif serveur 1000 sont connectées à travers un bus de communication 1004. La mémoire 1002 comporte du code logiciel 1008. La mémoire 1009 est utilisée pour stocker et gérer les données à transmettre. Lorsque le processeur exécute le code logiciel 1008, il conduit le dispositif serveur à mettre en œuvre un procédé selon un ou plusieurs exemples de réalisation décrits. Ces données proviennent par exemple de la source de données 1003. De façon similaire, le dispositif client comporte un processeur 1101, une mémoire 1102, un stockage de masse 1103 destiné à stocker les données reçues du serveur ou de plusieurs serveurs, une interface utilisateur 1105, une interface de communication 1106 configurée pour communiquer de façon bidirectionnelle avec le dispositif serveur 1000, un afficheur 1107, une mémoire de travail 1109 et un bus de communication 1104. La mémoire 1102 comporte du code logiciel 1108. Lorsque le processeur exécute le code logiciel 1108, il conduit le dispositif client à mettre en œuvre un procédé selon un ou plusieurs exemples de réalisation décrits.

Les dispositifs 1000 et 1100 sont décrits ci-dessus à titre illustratif et peuvent comporter plus ou moins de blocs fonctionnels que ceux décrits ci-dessus, selon les nécessités d'un contexte particulier. Notamment l'afficheur peut être absent.

Selon un ou plusieurs exemples de réalisation, le dispositif serveur 1000 est un compteur métrologique d'une grandeur physique (typiquement une mesure d'électricité, d'eau, de gaz, d'énergie thermique...) tandis que le dispositif client 1100 est un dispositif collectant les données de différents serveurs pour le compte de l'opérateur du réseau de distribution. La source de données 1003 est par exemple l'organe métrologique proprement dit du compteur, organe qui produit une valeur de la grandeur comptée. L'organe métrologique est par exemple en charge de mesurer et d'enregistrer une grandeur physique absolue (intensité d'un courant, pression d'un gaz) ou cumulative (énergie électrique ou volume d'un gaz qui a transité). Les données peuvent être obtenues de façon périodique ou apériodique ou comprendre une combinaison de données obtenues de façon périodique et apériodique. Le réseau de communication est par exemple un média radio d'un des types 2G/3G/4G/LTE NB-loT/LTE Cat-M1/LoRa ou autre.

Le DLMS ou 'Spécification de Messages Langage de Dispositif' ('Device Language Message Specification' en langue anglaise) comprend une série de standards développés et maintenus par l'Association des Utilisateurs DLMS ('DLMS UA') et standardisant les échanges de données de compteurs électriques ou autres. Le DLMS UA maintient notamment le 'Livre Bleu' COSEM (pour Modèle Sémantique Complet pour la Gestion de l'Energie ou 'Comprehensive Semantic Model for Energy Management' en langue anglaise). On peut se référer au document 'DLMS UA 1000-1', version 15, partie 2, version 1.0 du 21 décembre 2021 pour plus d'informations concernant le DLMS.

Le serveur 1000 et le client 1100 de la figure 1 peuvent, à titre d'exemple non limitatif, être compatibles avec le standard DLMS, mais la référence à ce standard est faite essentiellement pour illustrer plus clairement un exemple de réalisation concret, sans que cela ne limite la généralité de l'exposé. Une personne du métier pourra adapter les enseignements de la présente description à d'autres contextes que le DLMS.

Selon un ou plusieurs modes de réalisation, une transmission de données de la part d'un dispositif serveur vers le dispositif client est effectuée à l'initiative du dispositif client. Le dispositif client transmet une requête à un serveur, ce dernier initiant alors la transmission de ses données au dispositif client. Le client et le serveur fonctionnent alors en mode de transmission sur requête, dit mode 'pull' en langue anglaise.

Selon un ou plusieurs modes de réalisation, un dispositif serveur détermine des informations caractérisant l'évolution d'un niveau de qualité relative des conditions de transmission entre le dispositif client et le dispositif serveur dans le temps, sur une période de temps de référence donnée. Ces informations sont fonction de mesures de qualité effectuées durant cette période par le dispositif serveur, et sont communiquées par le dispositif serveur au dispositif client. Ce dernier peut alors utiliser les informations pour sélectionner le ou les moments pour demander une transmission, par le dispositif serveur, de données utiles lors d'une période de temps future.

La période de temps pendant laquelle le dispositif client utilisera les informations est une période pour laquelle il est attendu que l'évolution du niveau de qualité soit sensiblement identique ou du moins proche de celle de la période de référence. La détermination des informations caractérisant l'évolution d'un niveau de qualité des conditions de transmission dans le temps est effectuée est obtenue sur base de mesures réelles pour obtenir un niveau de qualité relatif. En effet, on tient compte, pour un dispositif serveur donné, des valeurs que les mesures atteignent effectivement et non de valeurs théoriques potentiellement non atteintes dans la pratique. Un même niveau de qualité déterminé par deux dispositifs serveurs distincts pourra donc indiquer des conditions de transmission différentes, mais par exemple le meilleur niveau de qualité indiquera pour les deux serveurs les meilleures conditions de transmission auxquelles on peut s'attendre.

Selon un ou plusieurs exemples de réalisation, la période de référence et la période future sont des périodes aux mêmes heures de deux journées distinctes, par exemple un période de 6 heures du matin à midi. Une période peut également couvrir une journée complète.

L'hypothèse est faite que le comportement du réseau présente, par exemple sur des plages horaires sensiblement identiques, des analogies dans l'évolution du niveau de qualité dans le temps. Ainsi, les informations fournies par le dispositif serveur au dispositif client sont une prédiction - ou encore une estimation présumée - de la qualité à différents moments d'une période similaire future, prédiction dont le dispositif client se sert pour choisir le moment approprié pour solliciter une transmission de la part d'un serveur pour améliorer les chances de réception correcte des données.

Selon un ou plusieurs modes de réalisation, la période de référence est définie par le dispositif client. Par exemple le dispositif client peut déterminer l'heure de début et la durée d'une période de référence et la transmettre à un ou plusieurs dispositifs client. Selon d'autres modes de réalisation, la période de référence est fixe.

Selon un ou plusieurs modes de réalisation, la période de temps durant laquelle le dispositif client cherchera à collecter les données du dispositif serveur correspond à une partie seulement de la période de référence. En effet, le dispositif serveur peut transmettre des informations pour une période de référence plus longue que la période de transmission envisagée par le dispositif client.

Selon un ou plusieurs exemples de réalisation, le dispositif client peut recevoir des informations caractérisant l'évolution d'un niveau de qualité dans le temps de plusieurs dispositifs serveurs et ainsi solliciter la transmission de données de manière différenciée pour chaque dispositif serveur. En effet, la localisation spécifique d'un dispositif serveur peut impacter les conditions de transmission et l'évolution des conditions réseau peut être propre à chaque dispositif serveur. Les informations déterminées par chaque dispositif serveur peuvent donc différer.

Selon un ou plusieurs exemples de réalisation, le dispositif serveur détermine des informations caractérisant un niveau de qualité en fonction du temps sur la base de mesures collectées sur une seule période de référence ou selon, une variante, sur base de mesures collectées sur plusieurs périodes de référence. Ainsi, il est possible de limiter l'impact de mesures bruitées.

Selon un ou plusieurs exemples de réalisation, la détermination des informations caractérisant un niveau de qualité en fonction du temps inclut l'analyse des mesures collectées pour déterminer un ou plusieurs seuils dans la plage des valeurs des mesures collectées, par exemple sur une période de référence. La détermination des informations est ensuite faite en fonction de ces seuils.

Selon un ou plusieurs exemples de réalisation, la période est une journée ou une partie de journée. Selon une variante, il est distingué parmi les jours de la semaine. Par exemple, des informations caractérisant le niveau de qualité sont déterminées séparément pour un jour de la semaine et pour un jour de fin de semaine. D'autres distinctions peuvent être faites selon les habitudes locales (jour ouvré ou non, dimanche, jour férié...). Selon d'autres modes de réalisation, la période de référence est prise pendant un jour de semaine identique à celui de la période de transmission par le dispositif client.

Selon un ou plusieurs exemples de réalisation, les informations caractérisant le niveau de qualité dans le temps sont évaluées par le dispositif serveur sur une période de référence et utilisées par le dispositif client pour la période similaire suivante. Par exemple, la période de référence est une journée (respectivement une plage horaire de la journée) et la période durant laquelle le dispositif client utilise les informations de cette période de référence durant la journée suivante (respectivement durant la même plage horaire journée suivante). Selon d'autres exemples de réalisation, des informations déterminées sur base d'une période de référence sont utilisées durant plusieurs périodes similaires.

Selon un ou plusieurs exemples de réalisation, les informations caractérisant le niveau de qualité sont déterminées sur base d'une pluralité de mesures effectuées lors de la période de référence, ces mesures caractérisant la qualité de la transmission (par exemple, la puissance de signal, le rapport signal/bruit...). Pour un réseau cellulaire 2G peuvent être basées par exemple sur l'indicateur de puissance reçue ('Received Signal Strength Indicator' ou 'RSSI' en langue anglaise). Pour un réseau 4G, LTE NB-loT ou LTE Cat-M1, on pourra utiliser la puissance d'un signal de référence reçu ('Reference Signal Received Power' ou 'RSRP' en langue anglaise), ou encore la qualité du signal de référence reçu ('Reference Signal Received Quality' ou 'RSRQ' en langue anglaise), représentative du ratio signal/bruit.

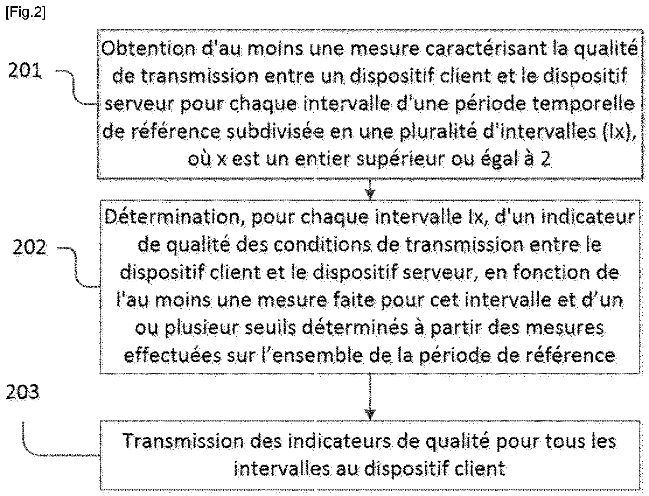

La figure 2 est un algorigramme d'une méthode mise en œuvre par un dispositif serveur, selon un ou plusieurs modes de réalisation non limitatifs. La méthode comprend :
- 201 - Obtention d'au moins une mesure caractérisant la qualité de transmission entre le dispositif client et le dispositif serveur pour chaque intervalle d'une période temporelle P1 subdivisée en une pluralité d'intervalles Ix, où x est un entier supérieur ou égal à 2.
- 202 - Détermination, pour chaque intervalle, d'un niveau de qualité des conditions de transmission entre le dispositif client et le dispositif serveur, en fonction de l'au moins une mesure faite pour cet intervalle par rapport à au moins un seuil de qualité déterminé à partir des mesures effectuées sur l'ensemble de la période de référence.
- 203 - Transmission au dispositif client des niveaux de qualité pour tous les intervalles.

Le fait de déterminer un niveau de qualité à partir de plusieurs mesures permet de maintenir les informations transmises au dispositif client dans un volume contenu de données. Selon la méthode de détermination du niveau de qualité en fonction des mesures, cela permet également de réduire l'éventuel bruit sur ces mesures (le niveau de qualité pouvant agréger, d'une façon ou d'une autre, l'ensemble des mesures associées à un intervalle), ou encore d'en obtenir une représentation statistique, par exemple basée sur des centiles.

Le ou les seuils de qualité peuvent être définis selon diverses manières. Deux exemples vont maintenant être décrits.

Selon un premier mode de réalisation, la détermination du niveau de qualité à partir des mesures se fait par rapport à un ou plusieurs seuils préprogrammés dans le dispositif serveur.

Selon un exemple non limitatif, il est mis en œuvre deux seuils, un premier seuil, dit seuil haut (Seuil_H) et un second seuil, dit seuil bas (Seuil_B). Au-dessus du seuil haut, la qualité est jugée bonne, en dessous du seuil bas, la qualité est jugée mauvaise et entre les deux seuils, la qualité est jugée moyenne. Les seuils préprogrammés peuvent par exemple avoir été déterminés selon les cas sur base de valeurs typiques pour le réseau considéré.

Selon un second mode de réalisation, la détermination du niveau de qualité à partir des mesures se fait par apprentissage. Un ou plusieurs seuils sont obtenus à partir des mesures effectuées pour l'ensemble de la période de référence. Ceci permet notamment comme indiqué précédemment d'établir le ou les seuils de qualité par rapport à des valeurs effectivement atteintes par les mesures.

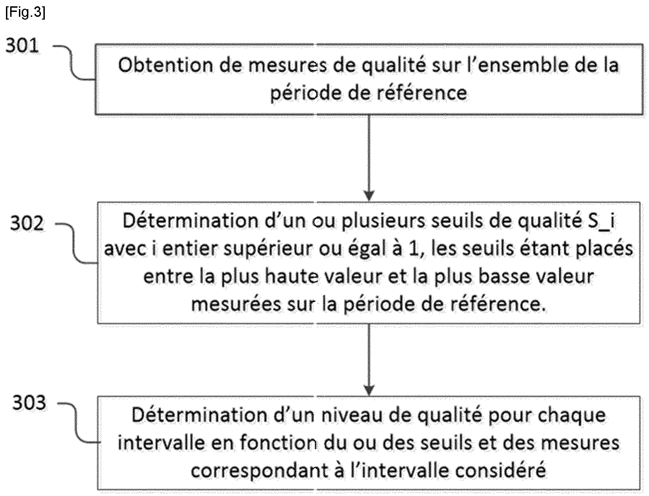

Selon un exemple non limitatif illustré par l'algorigramme de la figure 3, le dispositif serveur réalise une multitude de mesures sur l'ensemble de la période de référence en 301.

Par exemple, si la période de référence est d'une journée et que l'on considère que la qualité est mesurée grâce au RSRQ, une mesure peut être effectuée chaque minute, ce qui donnera 1440 mesures de RSRQ. Il est supposé dans ce qui suit qu'une première valeur de mesure supérieure à une seconde valeur de mesure indiquera une qualité meilleure que la qualité indiquée par la seconde valeur de mesure. La personne du métier saura adapter la méthode décrite si une première valeur plus basse qu'une seconde valeur est indicative d'une meilleure qualité que celle correspondant à la seconde valeur. Une fois les mesures effectuées pour la période de référence, le serveur effectue une détermination (302) d'un ou plusieurs seuils S_i, avec i entier supérieur ou égal à 1, les seuils étant placés entre la plus haute valeur et la plus basse valeur mesurées sur la période de référence. Un seuil est placé de façon à ce que Qi% des meilleures mesures en termes de qualité indiquée soient au-dessus de ce seuil, avec i entier supérieur ou égal à 1 et avec Qi une fonction croissante de i. Cela revient à effectuer un traitement des mesures par centiles.

A titre d'exemple numérique, il a été constaté qu'une valeur de i égale à 2 permettait d'obtenir de bons résultats dans un contexte expérimental. Comme ci-dessus, on désignera ces seuils par seuil haut (S_H) et seuil bas (S_B) et au-dessus du seuil haut, la qualité est jugée bonne, en dessous du seuil bas, la qualité sera jugée mauvaise et entre les deux seuils, la qualité sera jugée moyenne. Par exemple, le seuil haut pourra être défini comme étant un seuil au-dessus duquel se trouvent les 25% des meilleurs valeurs parmi les mesures effectuées, tandis que le seuil bas pourra être défini comme étant le seuil au-dessus duquel se placent 75% des meilleures valeurs. Bien entendu, les pourcentages ci-dessus sont donnés à titre illustratif et peuvent avoir des valeurs différentes.

Selon une variante du second mode de réalisation, le ou les seuils sont déterminés à partir de mesures effectuées sur plusieurs périodes et non une seule.

Selon un ou plusieurs exemples de réalisation, le premier mode de réalisation de la détermination des seuils à valeur préprogrammée est utilisé en attendant qu'un apprentissage selon le second mode de réalisation puisse être effectué.

Une fois le ou les seuils obtenus, pour chaque intervalle de la période de référence, un niveau de qualité est déterminé (303) en fonction du ou des seuils et des mesures correspondant à l'intervalle considéré.

Selon un exemple non limitatif, N niveaux de qualité sont déterminés, de la qualité la plus mauvaise à la meilleure qualité, avec N entier supérieur à 2. Un niveau de qualité est attribué en fonction de la distribution des valeurs de mesure par rapport aux seuils.

Par exemple, on considère deux seuils (seuil haut S_H, seuil bas S_B), cinq niveaux de qualité (avec par exemple le niveau +2 représentant une qualité très bonne et le niveau -2 représentant une qualité très mauvaise), une période de référence d'une journée divisée en 96 intervalles de quinze minutes, avec une mesure de qualité obtenue à chaque minute. Un exemple d'attribution d'un des cinq niveaux de qualité Ki pour un intervalle donné est comme suit :
- On considère les seize mesures d'un intervalle Ki
   1. Si 75% (ou plus) des mesures sont supérieures ou égales au seuil haut, alors on attribue le niveau +2
   2. Sinon si 50% des mesures sont supérieures ou égales au seuil haut, alors on attribue le niveau +1
   3. Sinon si 75% des mesures sont inférieures au seuil bas, alors on attribue le niveau -2
   4. Sinon si 50% des mesures sont inférieures au seuil bas, alors on attribue le niveau -1
   5. Sinon, on attribue le niveau 0.

Les valeurs ci-dessus sont des entiers centrés autour de zéro à titre illustratif, d'autres échelles peuvent bien entendu être utilisées.

Le tableau 1 est un exemple de structure des données utiles incluses dans une trame utilisée pour la transmission, par le dispositif serveur au dispositif client, des informations caractérisant l'évolution d'un niveau de qualité des conditions de transmission dans le temps sous la forme de niveaux de qualité par intervalle de temps, le tableau contenant un niveau de qualité (codé, selon l'exemple, sur trois bits) par intervalle de la période de référence (soit, selon l'exemple, 96 intervalles). Les données utiles peuvent avoir une structure plus simple, qui comprend par exemple simplement une liste de valeurs de trois bits dans l'ordre chronologique des intervalles dans la période de référence, l'intervalle concerné par une valeur étant identifié implicitement par l'ordre des valeurs.

**[Tableau 1]**

| | | | | | | | |
|---|---|---|---|---|---|---|---|
| Intervalle Ki | 1 | 2 | ... | n | ... | 95 | 96 |
| Niveau de qualité | 3 bits | 3 bits | 3 bits | 3 bits | 3 bits | 3 bits | 3 bits |

Selon un ou plusieurs exemples de réalisation, la transmission, du dispositif serveur au dispositif client, des informations caractérisant l'évolution d'un niveau de qualité des conditions de transmission dans le temps est effectuée en fin de période de référence ou juste avant ou encore au tout début de la période durant laquelle le dispositif client doit l'utiliser.

Selon un ou plusieurs exemples de réalisation, le dispositif client met en œuvre les informations caractérisant l'évolution d'un niveau de qualité des conditions de transmission lors d'une période de référence reçues d'un serveur donné pour déterminer, lors d'une période similaire, les moments opportuns pour initier un transfert de données à partir de ce serveur.

Selon un ou plusieurs exemples de réalisation, si le dispositif client ne reçoit pas les informations caractérisant l'évolution d'un niveau de qualité des conditions de transmission dans le temps d'un dispositif serveur donné, le dispositif client utilise des informations précédemment reçues de la part de ce dispositif serveur.

La période durant laquelle la transmission des données par le dispositif serveur est subdivisée en plusieurs sous-périodes recouvrant chacune plusieurs intervalles contigus. En prenant les sous-périodes dans l'ordre chronologique, le dispositif client va rechercher, dans une sous-période, si cette période comprend un ou plusieurs intervalles ayant au moins une qualité donnée (par exemple un niveau de qualité parmi N, pour reprendre un exemple non limitatif déjà décrit), en abaissant le niveau de qualité exigé au fur et à mesure des sous-périodes. Si au moins un intervalle de temps remplissant ce critère est trouvé, le dispositif client va transmettre au dispositif serveur, au début de chacun des intervalles trouvés, un message pour demander la transmission de données utiles, jusqu'à ce que la transmission des données sollicitées de la part du dispositif serveur se soit correctement effectuée. Si aucun intervalle correspondant au critère de qualité n'est trouvé dans une sous-période, alors aucune requête de transmission des données utiles n'est transmise au dispositif serveur. Si plusieurs intervalles correspondent, une requête est transmise intervalle par intervalle correspondant au critère, jusqu'à ce que les données utiles aient été correctement reçues. En fin d'une sous-période, on passe à la sous-période suivante, avec un abaissement du niveau de qualité exigé.

Lorsque la fin de la période est atteinte sans qu'une transmission correcte des données utiles ait pu avoir lieu, la méthode prend fin. Selon une variante, un nouvel essai est effectué lors d'une autre période.

L'abaissement progressif du niveau de qualité exigé permet dans un premier temps, en début de période, de rechercher les intervalles donnant les meilleures chances de donner lieu à une transmission réussie des données. Le coût en termes de quantité de données transmises est ainsi réduit. En cas d'insuccès, au fur et à mesure que l'on avance dans la période, l'exigence est abaissée. On accepte alors de moins bonnes conditions de transmission, ce qui peut nécessiter plusieurs tentatives de transmission pour que les données puissent être correctement reçues. Cela permet le cas échéant de recevoir les données, mais à un coût plus élevé en termes de quantité de données transmises.

Selon un ou plusieurs exemples de réalisation, le nombre de sous-périodes est au moins égal à N, où N représente le nombre de niveaux de qualité.

Le tableau 2 représente un exemple de l'exigence minimale en fonction des sous-périodes. I représente le niveau de qualité maximale et I-6 le niveau de qualité minimale. Par exemple, pour la sous-période 3, le critère de qualité exigé pour l'intervalle est que le niveau de qualité devra être égal à I, I-1 ou I-2 pour que le dispositif client émette une requête de transmission des données utiles lors de cet intervalle.

Dans le tableau, I est un entier dans cet exemple, mais bien entendu l'information caractérisant la qualité peut être codée autrement. De plus, l'abaissement illustré par le tableau 1 d'une sous-période est d'un niveau, mais il est possible d'abaisser de plusieurs niveaux et d'abaisser d'un nombre différent de niveaux d'une sous-période à une autre.

**[Tableau 2]**

| | | | | | | | |
|---|---|---|---|---|---|---|---|
| Sous-période | 1 | 2 | 3 | 4 | 5 | 6 | 7 |
| Niveau de qualité minimale pour un intervalle exigé pour initier une transmission lors de cet intervalle | I | I -1 | I-2 | I-3 | I-4 | I-5 | I-6 |

Selon les modes de réalisation, les sous-périodes peuvent avoir des durées sensiblement égales ou très différentes.

Par exemple, si la période a une durée de six heures, alors elle peut être divisée en deux sous-périodes de deux heures, suivies d'une sous-période d'une heure ; suivie d'une sous-période de 30 minutes et de deux sous-périodes de 15 minutes. Ou encore, si la période a une durée de 8 heures, elle peut être divisée en deux sous-périodes de trois heures, suivie d'une sous-période d'une heure, suivie de deux sous-périodes de 30 minutes.

Selon un ou plusieurs modes de réalisation, lorsque le niveau minimal de qualité indiqué par les informations est atteint pour une sous-période donnée, c'est ce même niveau minimal qui est appliqué pour une ou des éventuelles sous-périodes suivantes, si de telles sous-périodes existent.

Par exemple ; si l'on reprend l'exemple précédent de répartition en sous-périodes, que l'on considère cinq niveaux de qualité distincts, qu'on considère le niveau de qualité le plus haut pour la première sous-période, puis au moins le niveau de qualité suivant pour la sous-période suivante etc..alors le niveau de qualité le plus bas sera exigé dès la première sous-période de 15 minutes.

Selon certains modes de réalisation, une période peut être divisée en périodes intermédiaires, dont chacune est elle-même divisée en sous-périodes. La méthode décrite ci-dessus est alors appliquée à chacune des périodes intermédiaires, jusqu'à ce que la collecte des données par le dispositif du client à partir du dispositif serveur considéré ait été correctement réalisée. Cela permet de réitérer l'ensemble de la méthode plusieurs fois par période, en repartant pour chaque sous-période de l'exigence initiale en matière de qualité. Les informations caractérisant l'évolution du niveau de qualité des conditions de transmission dans le temps auront préalablement été reçues pour la période entière.

Par exemple, une journée est divisée en quatre périodes intermédiaires de six heures, chaque période intermédiaire étant divisée en sous-périodes selon l'exemple donné précédemment.

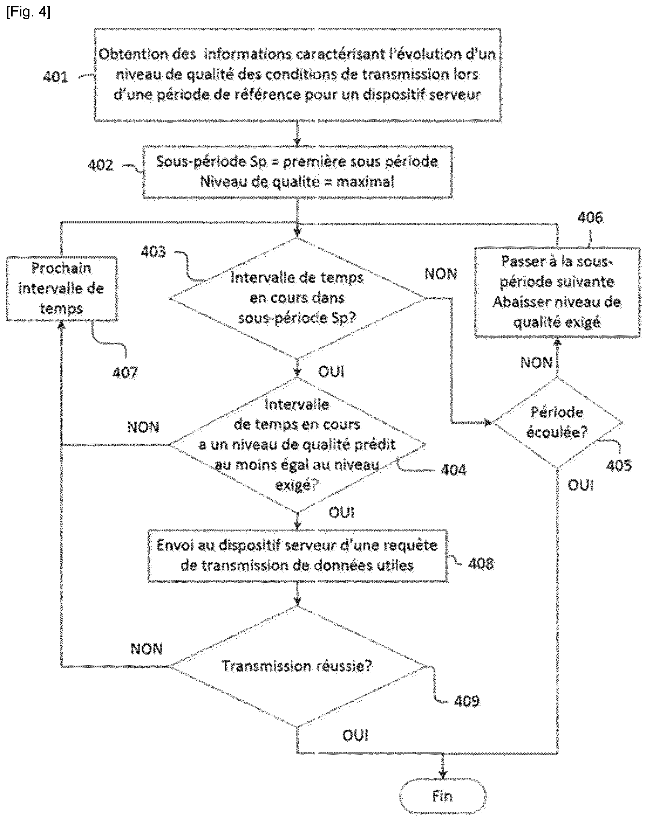

La figure 4 est un algorigramme illustrant une méthode mise en œuvre par un dispositif client selon un ou plusieurs exemples de réalisation. La méthode de la figure 4 s'applique pour un dispositif serveur donné, mais peut être utilisée en parallèle pour plusieurs serveurs.

Dans un premier temps, le dispositif client obtient les informations caractérisant l'évolution du niveau de qualité des conditions de transmission lors d'une période de référence pour un dispositif serveur donné (401).

Le dispositif client va procéder par sous-périodes de la période durant laquelle il cherche à obtenir la transmission des données utiles du dispositif serveur. Pour chaque sous-période, en commençant par la première (402) et avec un niveau de qualité exigée maximal (403), le dispositif client va déterminer si un intervalle de temps en cours correspond au critère de qualité exigé, à savoir si le niveau de qualité prédit pour cet intervalle dans les informations reçues est au moins égal à un niveau minimal fonction de la sous-période. Cette vérification est effectuée en 404. Si la vérification est positive, alors une requête pour la transmission des données utiles est envoyée au dispositif serveur (408). Si les données sont correctement reçues (vérification en 409), alors le processus prend fin. Si les données ne sont pas correctement reçues, alors le prochain intervalle répondant au critère de qualité est attendu (407).

Il est testé par ailleurs si l'intervalle de temps en cours appartient à la sous-période actuellement considérée (403). Si ce n'est pas le cas et que l'ensemble de la période envisagée pour la transmission ne s'est pas écoulée (vérification en 405), alors la sous-période suivante est abordée et le niveau de qualité exigé est abaissé s'il n'est pas au niveau minimum (en 406). Si l'intervalle courant appartient à la sous période en cours, l'étape 404 est abordée comme décrit au paragraphe précédent.

Selon l'exemple de la figure 4, la détermination de savoir si un intervalle de temps répond au critère de qualité est réalisée en temps réel. Cependant, selon d'autres modes de réalisation, la détermination des intervalles correspondant aux critères est réalisée à l'avance et le résultat de cette détermination est appliqué lorsque ces intervalles surviennent.

Selon un ou plusieurs exemples de réalisation, si en fin de période, aucune transmission n'a pu être sollicitée ou si aucune transmission de données n'a pu se faire correctement, un nouvel essai est tenté lors d'une période ultérieure.

Selon un ou plusieurs exemples de réalisation, le dispositif client interagit avec plusieurs dispositifs serveurs. Il est alors possible de mettre en œuvre la méthode en parallèle pour autant de dispositifs serveurs que nécessaire, avec des informations relatives à l'évolution de la qualité propres à chaque dispositif serveur.

Selon un ou plusieurs exemples de réalisation, la durée d'une sous-période est adaptée dynamiquement en avançant le début dans la sous-période précédente. Cela est possible notamment lorsque tous les serveurs sollicités lors de la période précédente auront transmis leurs données avec succès. Ainsi, la durée d'une sous-période peut être agrandie - le niveau de qualité exigé pour les intervalles ayant précédemment fait partie de la sous-période précédente sera diminué, ce qui donnera potentiellement plus d'occasions au dispositif client de solliciter la transmission des données utiles.

Selon un ou plusieurs exemples de réalisation, la durée des sous-périodes pour un dispositif serveur donné est fonction des informations caractérisant l'évolution du niveau de qualité dans le temps de ce dispositif serveur. Le dispositif client peut alors adapter la durée des sous-périodes. Par exemple, si le dispositif serveur a globalement une mauvaise qualité de transmission, le dispositif client peut prévoir une durée des sous-périodes tardives plus longues que la durée des sous-périodes initiales. Dans ce dernier cas, cela augmentera en fin de période le nombre d'intervalles répondant au critère de qualité, augmentant la probabilité d'une transmission réussie des données utiles.

A titre purement illustratif, on divisera par exemple une période de six heures en trois périodes d'une heure, suivies de deux périodes de 1,5 heures.

Le fait de savoir si un dispositif serveur a globalement une bonne ou une mauvaise qualité de transmission peut par exemple être évalué en comparant le niveau moyen de qualité dans les informations reçues par rapport à un seuil.

Selon un ou plusieurs exemples, il est divulgué un procédé de transmission de données entre un dispositif serveur des données (1000) et un dispositif client récepteur des données (1100) dans un réseau de communication, le dispositif serveur comprenant une mémoire (1002) comportant du code logiciel (1008) et un processeur (1001) qui, quand il exécute le code logiciel, conduit le dispositif serveur à mettre en œuvre le procédé, le procédé comprenant :
- l'obtention (201), sur une première période de temps, d'une pluralité de mesures caractérisant une qualité de transmission entre le dispositif client et le dispositif serveur ;
- la détermination (202), en fonction des mesures, d'informations caractérisant, en fonction du temps, un niveau de qualité relatif de transmission durant la première période ;
- la transmission (203) des informations au dispositif client.

Le procédé ci-dessus peut de plus comprendre la réception d'une requête de transmission des données du dispositif client et la transmission des données en réponse à la requête.

### SIGNES DE REFERENCE

- 1000 -: Dispositif serveur
- 1001 -: Processeur
- 1002 -: Mémoire
- 1003 -: Source de données
- 1004 -: Bus de communication
- 1005 -: Interface utilisateur
- 1006 -: Interface de communication bidirectionnelle
- 1007 -: Affichage
- 1008 -: Code logiciel
- 1009 -: Mémoire de travail
- 1100 -: Dispositif client
- 1101 -: Processeur
- 1102 -: Mémoire
- 1103 -: Stockage de masse
- 1104 -: Bus de communication
- 1105 -: Interface utilisateur
- 1106 -: Interface de communication bidirectionnelle
- 1107 -: Affichage
- 1108 -: Code logiciel
- 1109 -: Mémoire de travail

## Revendications

1. Procédé de transmission de données entre un dispositif serveur des données (1000) et un dispositif client récepteur des données (1100) dans un réseau de communication, le dispositif serveur comprenant une mémoire (1002) comportant du code logiciel (1008) et un processeur (1001) qui, quand il exécute le code logiciel, conduit le dispositif serveur à mettre en œuvre le procédé, le procédé étant **caractérisé par** :
- l'obtention (201), sur une première période de temps, d'une pluralité de mesures caractérisant une qualité de transmission entre le dispositif client et le dispositif serveur ;
- la détermination (202), en fonction des mesures, d'informations caractérisant l'évolution en fonction du temps, d'un niveau de qualité relatif de transmission durant la première période ;
- la transmission (203) des informations au dispositif client ;
- la réception, lors d'une seconde période future par rapport à la première période, d'une requête de transmission des données du dispositif client, le moment de la transmission de la requête par le dispositif client étant fonction desdites informations transmises par le dispositif serveur au dispositif client; et
- la transmission des données au dispositif client en réponse à la requête.

2. Procédé selon la revendication 1, la première période étant subdivisée en intervalles de temps, la détermination des informations comprenant la détermination (303) d'un niveau de qualité pour chaque intervalle sur base des mesures effectuées pour cet intervalle par rapport à un ou plusieurs seuils déterminés (302) à partir des mesures effectuées sur l'ensemble de la première période.

3. Procédé selon la revendication 2, dans lequel le ou les seuils sont choisis entre la plus haute et la plus basse valeur de mesure de la première période.

4. Procédé selon l'une des revendications 1 à 3, dans lequel la détermination des informations et la transmission de ces informations sont effectuées périodiquement.

5. Procédé selon l'une des revendications 1 à 4, dans lequel la première période est une parmi : une plage horaire d'une journée, une journée.

6. Procédé selon l'une des revendications 1 à 5, dans lequel le réseau de communication est un réseau cellulaire.

7. Procédé de transmission de données d'au moins un dispositif serveur (1000) à un dispositif client (1100) dans un réseau de communication, le dispositif client comprenant une mémoire (1102) comportant du code logiciel (1108) et un processeur (1101) qui, quand il exécute le code logiciel, conduit le dispositif client à mettre en œuvre le procédé, le procédé étant **caractérisé par** :
- la réception (401), par le dispositif client, de la part d'un dispositif serveur donné, d'informations transmises par un dispositif serveur donné, les informations caractérisant une évolution d'un niveau de qualité relatif de transmission entre le dispositif client et ledit dispositif serveur donné durant une première période de temps ;
- l'estimation (404) du niveau de qualité relatif de transmission pendant un intervalle de temps donné d'une seconde période sur base desdites informations correspondant au même intervalle de temps de la première période, la plage horaire couverte par la première période incluant au moins la plage horaire de la seconde période ;
- la décision d'envoi (408) d'une requête de transmission des données au dispositif serveur donné pendant l'intervalle donné en fonction de la comparaison de l'estimation pour cet intervalle avec un seuil de qualité.

8. Procédé selon la revendication 7, la décision de l'envoi est prise au fur et à mesure de l'avancée du temps pendant la seconde période, jusqu'à (409) ce qu'un envoi résulte en la réception réussie desdites données.

9. Procédé selon l'une des revendications 7 ou 8, dans lequel ledit seuil de qualité est fonction du placement de l'intervalle donné dans la seconde période, le seuil de qualité ayant une valeur maximale en début de seconde période et baissant (406) au fur et à mesure de l'avancée du temps dans la seconde période vers une valeur minimale.

10. Procédé selon l'une des revendications 7 à 9, dans lequel la seconde période est l'une parmi
- une partie d'une journée correspondant à la même partie de journée couverte par la première journée lors d'une journée précédente ;
- la journée consécutive à une journée couverte par la première période.

11. Procédé selon l'une des revendications 7 à 10, comprenant la réception des informations de la part d'une pluralité de dispositifs serveurs, la décision d'envoi d'une requête vers un dispositif serveur étant fonction des informations reçues de la part de ce dispositif serveur.

12. Procédé selon l'une des revendications 7 à 11, dans lequel le réseau de communication est un réseau cellulaire.

13. Dispositif serveur (1000) comprenant une mémoire (1002) comportant du code logiciel (1008) et un processeur (1001) qui, quand il exécute le code logiciel, conduit le dispositif serveur à mettre en œuvre le procédé selon l'une des revendications 1 à 6.

14. Dispositif client (1100) comprenant une mémoire (1102) comportant du code logiciel (1108) et un processeur (1101) qui, quand il exécute le code logiciel, conduit le dispositif client à mettre en œuvre le procédé selon l'une des revendications 7 à 11.

15. Système comprenant un dispositif client (1100) selon la revendication 14 et au moins un dispositif serveur (1000) selon la revendication 13.

## Patentansprüche

1. Verfahren zum Übertragen von Daten zwischen einer Daten-Server-Vorrichtung (1000) und einer Daten-Client-Empfangsvorrichtung (1100) in einem Kommunikationsnetz, wobei die Server-Vorrichtung einen Speicher (1002) umfasst, der Softwarecode (1008) aufweist, und einen Prozessor (1001), der, wenn er den Softwarecode ausführt, die Server-Vorrichtung veranlasst, das Verfahren zu implementieren, wobei das Verfahren **gekennzeichnet ist durch:**
- Ermittlung (201), über einen ersten Zeitraum hinweg, einer Vielzahl von Messungen, die eine Übertragungsqualität zwischen der Client-Vorrichtung und der Server-Vorrichtung kennzeichnen;
- Bestimmung (202) von Informationen, die die zeitliche Entwicklung eines relativen Qualitätsniveaus der Übertragung während des ersten Zeitraums kennzeichnen, in Abhängigkeit von den Messungen;
- Übermittlung (203) der Informationen an die Client-Vorrichtung;
- Empfang einer Anforderung zur Datenübertragung von der Client-Vorrichtung während eines zweiten künftigen Zeitraums gegenüber dem ersten Zeitraum, wobei der Übertragungszeitpunkt der Anforderung **durch** die Client-Vorrichtung von den von der Server-Vorrichtung an die Client-Vorrichtung übertragenen Informationen abhängig ist; und
- Übertragung der Daten an die Client-Vorrichtung als Antwort auf die Anforderung.

2. Verfahren nach Anspruch 1, wobei der erste Zeitraum in Zeitintervalle unterteilt ist, wobei das Bestimmen der Informationen das Bestimmen (303) eines Qualitätsniveaus für jedes Intervall auf der Basis der für dieses Intervall durchgeführten Messungen in Bezug auf einen oder mehrere Schwellenwerte umfasst, die aus den über den gesamten ersten Zeitraum durchgeführten Messungen bestimmt (302) wurden.

3. Verfahren nach Anspruch 2, wobei der oder die Schwellenwert(e) zwischen dem höchsten und dem niedrigsten Messwert des ersten Zeitraums gewählt werden.

4. Verfahren nach einem der Ansprüche 1 bis 3, wobei das Bestimmen der Informationen und die Übertragung dieser Informationen periodisch erfolgen.

5. Verfahren nach einem der Ansprüche 1 bis 4, wobei der erste Zeitraum eines der folgenden ist: ein Zeitfenster eines Tages, ein Tag.

6. Verfahren nach einem der Ansprüche 1 bis 5, wobei das Kommunikationsnetz ein Mobilfunknetz ist.

7. Verfahren zum Übertragen von Daten von mindestens einer Server-Vorrichtung (1000) an eine Client-Vorrichtung (1100) in einem Kommunikationsnetz, wobei die Client-Vorrichtung einen Speicher (1102) umfasst, der Softwarecode (1108) aufweist, und einen Prozessor (1101), der, wenn er den Softwarecode ausführt, die Client-Vorrichtung veranlasst, das Verfahren zu implementieren, wobei das Verfahren **gekennzeichnet ist durch:**
- Empfang (401) von Informationen, die von einer bestimmten Server-Vorrichtung übertragen wurden, **durch** die Client-Vorrichtung von einer bestimmten Server-Vorrichtung, wobei die Informationen eine Entwicklung eines relativen Qualitätsniveaus der Übertragung zwischen der Client-Vorrichtung und der bestimmten Server-Vorrichtung während eines ersten Zeitraums kennzeichnen;
- Schätzung (404) des relativen Qualitätsniveaus der Übertragung während eines bestimmten Zeitintervalls eines zweiten Zeitraums auf der Basis der Informationen, die demselben Zeitintervall des ersten Zeitraums entsprechen, wobei das vom ersten Zeitraum abgedeckte Zeitfenster mindestens das Zeitfenster des zweiten Zeitraums einschließt;
- die Entscheidung zum Senden (408) einer Anforderung zur Übertragung der Daten an die bestimmte Server-Vorrichtung während des bestimmten Intervalls in Abhängigkeit von dem Vergleich der Schätzung für dieses Intervall mit einem Qualitätsschwellenwert.

8. Verfahren nach Anspruch 7, wobei die Entscheidung zum Senden im Lauf der Zeit während des zweiten Zeitraums getroffen wird, bis (409) ein Senden zum erfolgreichen Empfang der Daten führt.

9. Verfahren nach einem der Ansprüche 7 oder 8, wobei der Qualitätsschwellenwert von der Platzierung des bestimmten Intervalls in dem zweiten Zeitraum abhängig ist, wobei der Qualitätsschwellenwert zu Beginn des zweiten Zeitraums einen Maximalwert aufweist und im Lauf der Zeit in dem zweiten Zeitraum in Richtung eines Minimalwerts abnimmt (406).

10. Verfahren nach einem der Ansprüche 7 bis 9, wobei die zweite Zeitraum einer der folgenden ist:
- ein Teil eines Tages, der dem gleichen Teil des Tages entspricht, der an einem vorhergehenden Tag vom ersten Tag abgedeckt wurde;
- der Tag, der auf einen Tag folgt, der durch den ersten Zeitraum abgedeckt wurde.

11. Verfahren nach einem der Ansprüche 7 bis 10, umfassend den Empfang von Informationen von einer Vielzahl von Server-Vorrichtungen, wobei die Entscheidung zum Senden einer Anforderung an eine Server-Vorrichtung von den von dieser Server-Vorrichtung empfangenen Informationen abhängig ist.

12. Verfahren nach einem der Ansprüche 7 bis 11, wobei das Kommunikationsnetz ein Mobilfunknetz ist.

13. Server-Vorrichtung (1000), umfassend einen Speicher (1002), der Softwarecode (1008) aufweist, und einen Prozessor (1001), der, wenn er den Softwarecode ausführt, die Server-Vorrichtung veranlasst, das Verfahren nach einem der Ansprüche 1 bis 6 zu implementieren.

14. Client-Vorrichtung (1100), umfassend einen Speicher (1102), der Softwarecode (1108) aufweist, und einen Prozessor (1101), der, wenn er den Softwarecode ausführt, die Client-Vorrichtung veranlasst, das Verfahren nach einem der Ansprüche 7 bis 11 zu implementieren.

15. System, das eine Client-Vorrichtung (1100) nach Anspruch 14 und mindestens eine Server-Vorrichtung (1000) nach Anspruch 13 umfasst.

## Claims

1. Method for data transmission between a data server device (1000) and a data-receiving client device (1100) in a communication network, the server device comprising a memory (1002) including software code (1008) and a processor (1001) which, when it executes the software code, causes the server device to implement the method, the method being **characterized by:**
- obtaining (201), over a first time period, a plurality of measurements characterizing a quality of transmission between the client device and the server device;
- determining (202), depending on the measurements, information characterizing the evolution over time of a relative level of quality of transmission during the first period;
- transmitting (203) the information to the client device;
- receiving, during a second future period with respect to the first period, a data transmission request from the client device, the time of transmission of the request by the client device depending on said information transmitted by the server device to the client device; and
- transmitting the data to the client device in response to the request.

2. Method according to claim 1, the first period being sub-divided into time intervals, the determination of the information comprising determining (303) a level of quality for each interval on the basis of measurements taken for this interval with respect to one or more thresholds determined (302) from the measurements taken over the entire first period.

3. Method according to claim 2, wherein the threshold(s) are chosen between the highest and the lowest measurement value of the first period.

4. Method according to any of claims 1 to 3, wherein the determination of the information and the transmission of this information are carried out periodically.

5. Method according to any of claims 1 to 4, wherein the first period is one of the following: a time window of a day, a day.

6. Method according to any of claims 1 to 5, wherein the communication network is a cellular network.

7. Method for data transmission from at least one server device (1000) to a client device (1100) in a communication network, the client device comprising a memory (1102) including software code (1108) and a processor (1101) which, when it executes the software code, causes the client device to implement the method, the method being **characterized by:**
- receiving (401), by the client device, from a given server device, information transmitted by a given server device, the information characterizing an evolution of a relative level of quality of transmission between the client device and said given server device during a first time period;
- estimating (404) the relative level of quality of transmission during a given time interval of a second period on the basis of said information corresponding to the same time interval of the first period, the time window covered by the first period including at least the time window of the second period;
- deciding (408) to send a data transmission request to the given server device during the given interval depending on the comparison of the estimation for this interval with a quality threshold.

8. Method according to claim 7, the sending decision being taken as time advances during the second period, until (409) sending results in successfully receiving said data.

9. Method according to either claim 7 or claim 8, wherein said quality threshold depends on the placement of the given interval in the second period, the quality threshold having a maximum value at the start of the second period and decreasing (406) as time advances in the second period toward a minimum value.

10. Method according to any of claims 7 to 9, wherein the second period is one of the following:
- a part of a day corresponding to the same part of the day covered by the first day during a previous day;
- the day following a day covered by the first period.

11. Method according to any of claims 7 to 10, comprising receiving information from a plurality of server devices, the decision to send a request to a server device depending on the information received from this server device.

12. Method according to any of claims 7 to 11, wherein the communication network is a cellular network.

13. Server device (1000) comprising a memory (1002) including software code (1008) and a processor (1001) which, when it executes the software code, causes the server device to implement the method according to any of claims 1 to 6.

14. Client device (1100) comprising a memory (1102) including software code (1108) and a processor (1101) which, when it executes the software code, causes the client device to implement the method according to any of claims 7 to 11.

15. System comprising a client device (1100) according to claim 14 and at least one server device (1000) according to claim 13.
